# EUROPÄISCHE PATENTSCHRIFT

(11) **EP 2 783 408 B1**
(45) Veröffentlichungstag und Bekanntmachung des Hinweises auf die Patenterteilung: **15.03.2017**
(21) Anmeldenummer: 12790883.8
(22) Anmeldetag: 21.11.2012
(51) Int. Cl.: H01M 2/16, H01M 4/04, H01M 10/04, H01M 12/06

(54) **GEDRUCKTE BATTERIEN**
PRINTED BATTERIES
BATTERIES IMPRIMÉES

(30) Priorität: 22.11.2011 DE 102011086899
(43) Veröffentlichungstag der Anmeldung: 01.10.2014
(73) Patentinhaber: VARTA Microbattery GmbH, 73479 Ellwangen (DE)
(72) Erfinder: ENSLING, David, 73479 Ellwangen (DE); PYTLIK, Edward, 73479 Ellwangen (DE); LINDNER, Hans Jürgen, 73479 Ellwangen (DE)
(74) Vertreter: Patentanwaltskanzlei Cartagena
(86) Internationale Anmeldenummer: PCT/EP2012/073199
(87) Internationale Veröffentlichungsnummer: WO 2013/076125

(56) Entgegenhaltungen:
- WO-A1-01/80338
- WO-A2-03/012908
- DE-A1-102010 018 071
- DE-A1-102010 023 092
- US-A1- 2011 111 292

## Beschreibung

Die vorliegende Erfindung betrifft ein Verfahren zur Herstellung von Knopfzellen.

Der Begriff "Batterie" meinte ursprünglich mehrere in Serie geschaltete galvanische Zellen. Heute werden jedoch auch einzelne galvanische Zellen als Batterie bezeichnet. Bei der Entladung einer galvanischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionenleitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Batterien gibt es in den unterschiedlichsten Ausführungsformen. Entscheidend für die Bauform und die Größe von Batterien ist der jeweilige Anwendungsfall. So wurden mehrere Tonnen schwere Batterien als Notstromversorgung für industrielle Anwendungen entwickelt, im Consumer-Bereich findet man dagegen Batterien mit Gewichten von wenigen Gramm oder sogar nur wenigen Milligramm.

Insbesondere die Konstruktion besonders kleiner und flacher Batterien, wie sie von miniaturisierten elektronischen Komponenten und Geräten häufig benötigt werden, stellt Batteriekonstrukteure immer wieder vor Herausforderungen. So wurden beispielsweise für spezielle Anwendungsfälle, wie sie die Energieversorgung von Smart Tags, Smart Labels oder Smart Cards darstellen, die in der DE 101 62 832 A1, der DE 102 19 424 A1 und der DE 10 2005 017 682 A1 beschriebenen Batterien entwickelt. Die in der letzteren Druckschrift beschriebenen Batterien lassen sich insbesondere durch Druck herstellen.

Die Herstellung von Elektroden mittels "InkJet-Printing" ist aus der US 2011/0111292 A1 bekannt. Ein druckbarer Elektrolyt ist aus der DE 10 2010 018 071 A1 bekannt. Eine weitere durch Druck herstellbare Batterie ist aus der DE 10 2010 023 092 A1 bekannt.

Aus der WO 01/80338 A1 und aus der WO 03/012908 A2 sind Batterien bekannt, die mittels "InkJet-Printing" hergestellt werden. Dabei werden jeweils Elektroden und ein Elektrolyt / Separator sequentiell auf ein Substrat gedruckt. Es werden jeweils konkrete Zusammensetzungen hierfür geeigneter Dispersionen beschrieben.

Besondere Schwierigkeiten treten insbesondere in den Fällen auf, in denen existierende Batteriesysteme weiter miniaturisiert werden sollen, ohne an ihrer grundsätzlichen Konstruktion etwas zu ändern. Ein Beispiel hierfür sind prismatische Zellen oder Knopfzellen. Häufig lassen sich die Maße einzelner Funktionsteile solcher Batterien wie des Gehäuses, des Separators und der Elektroden zwar deutlich herunterskalieren, schwierig ist dann aber deren Montage, beispielsweise das präzise Platzieren von Elektroden und Separator in einem miniaturisierten Knopfzellengehäuse.

Der vorliegenden Erfindung lag die Aufgabe zugrunde, eine technische Lösung bereitzustellen, die es erlaubt, Knopfzellen zu miniaturisieren, ohne dazu ihren konstruktiven Aufbau grundsätzlich modifizieren zu müssen.

Diese Aufgabe wird gelöst durch das Verfahren mit den Merkmalen des Anspruchs 1. Bevorzugte Merkmale des erfindungsgemäßen Verfahrens sind in den abhängigen Ansprüchen 2 bis 9 angegeben.

Das erfindungsgemäße Verfahren dient der Herstellung von Knopfzellen, die ein Gehäuse und einen darin angeordneten dreidimensionalen Elektroden-Separator-Verbund aufweisen, letzterer mit
- mindestens einer ersten Elektrode,
- mindestens einer zweiten, zur ersten entgegengesetzt gepolten Elektrode und
- mindestens einem, die erste und die zweite Elektrode räumlich trennenden Separator.

Derartige Verbünde sind beispielsweise aus prismatischen Zellen oder aus Knopfzellen bekannt. Prismatische Zellen weisen üblicherweise folienartige Elektroden und Separatoren auf, die flächig miteinander zu einem Verbund mit der Sequenz positive Elektrode / Separator / negative Elektrode verbunden sind. In Knopfzellen bildet ein in der Regel scheibenförmiger Separator einen Verbund mit zwei entgegengesetzt gepolten Elektroden. Im Unterschied zu prismatischen Zellen ist das Verhältnis der Elektrodenmassen zur Fläche des Separators allerdings sehr viel größer.

In bevorzugten Ausführungsformen kann der Elektroden-Separator-Verbund auch
- einen oder mehrere Ableiter
   umfassen, die mit der mindestens einen ersten und/oder mit der mindestens einen zweiten Elektrode in elektrischem Kontakt stehen.

Bei prismatischen Zellen handelt es sich bei den Ableitern meist um Netze oder Folien aus Metall, bei Lithium-Ionen-Zellen im Fall der positiven Elektrode insbesondere um Netze oder Folien aus Aluminium, im Fall der negativen Elektrode insbesondere um Netze oder Folien aus Kupfer. Der Verbund kann beispielsweise die Sequenz erster Ableiter / positive Elektrode / Separator / negative Elektrode / zweiter Ableiter aufweisen. In Knopfzellen sind Ableiter nicht zwingend erforderlich, da die Elektrodenmassen üblicherweise ja in unmittelbarem Kontakt mit den Polen der Knopfzelle (den Gehäuseteilen) stehen. Beispielsweise im Fall von Metall-Luft-Knopfzellen mit einer Luftkathode umfasst diese jedoch regelmäßig einen Ableiter.

Das erfindungsgemäße Verfahren zeichnet sich besonders dadurch aus, dass der Verbund aus Elektroden und Separator schichtweise aufgebaut wird, indem zweidimensionale Schichten aus
- einer ersten und einer zweiten Elektrodendispersion zur Herstellung der Elektroden,
- einer Separatordispersion zur Herstellung des mindestens einen Separators und
- gegebenenfalls aus einer Ableiterdispersion zur Herstellung des mindestens einen Ableiters
sequentiell übereinander gedruckt werden. Zur Herstellung des Verbundes werden also keine vorgefertigten Funktionsteile kombiniert, stattdessen werden die Elektroden und der Separator sowie gegebenenfalls der oder die Ableiter in unmittelbarem Kontakt zueinander gebildet. Abhängig von der Dicke der zweidimensionalen Schichten und der gewünschten Dicke der zu druckenden Verbundkomponenten bedarf es jeweils mehrerer Druckvorgänge zur Herstellung der einzelnen Komponenten, beispielsweise des Separators.

Mit jeder Druckschicht wächst die Dicke der zu druckenden Komponente und damit des Verbundes senkrecht zur Ebene der gedruckten Schichten an. Grundsätzlich lassen sich so beliebig hohe Schichtverbünde erzeugen.

Es ist bevorzugt, dass die zweidimensionalen Schichten in einer Dicke im Bereich zwischen 1 µm und 500 µm gedruckt werden, bevorzugt zwischen 10 µm und 300 µm, wobei sich diese Werte auf die Nassfilmdicke der Schichten vor Trocknung beziehen.

Als Druckverfahren kommt zum Drucken der zweidimensionalen Schichten bevorzugt das sogenannte "InkJet-Printing" oder "Microdispensing" zum Einsatz, bei dem durch eine oder mehrere Austragsöffnungen definierte Mengen der genannten Dispersionen abgegeben werde. Bei diesen Verfahren können die Dispersionen aus einem Vorratsgefäß in einen Druckkopf überführt werden, dessen Kernstück eine Kapillare darstellt, die typischerweise in eine sehr dünne Kapillarspitze (Düse) mündet. Aus dieser wird die Dispersion in Tropfenform hinausgedrückt, meist getrieben durch piezoelektrisch erzeugte Schockwellen oder Druckwellen in Folge einer Verdampfung von Dispersionsmittel.

Bei letzterer Technologie, die auch als Bubblejet-Verfahren bekannt ist, wirken kurzzeitige Heizimpulse auf die in der Kapillare befindliche Dispersion. Dabei wird eine Dampfblase erzeugt, die einen hohen Druck auf die Dispersion ausübt. Mit größer werdender Blase steigt der Druck in der Düse weiter an, bis die Blase einen Tropfen Dispersion durch die Düse herausschleudert. Anschließend kondensiert die Dampfblase, wodurch hinter der Düse ein Unterdruck entsteht durch den ein Nachfließen der Dispersion aus dem Vorratsbehälter erreicht wird.

Bei piezoelektrischen Verfahren wird die Kapillare unmittelbar vor der Spitze von einem piezoelektrischen Aktuator umschlossen, der elektrische Impulse als Druckimpulse durch die Kapillarenwände an die in der Kapillare befindliche Dispersion weitergibt. Die Druckimpulse lösen in der Dispersion Schockwellen aus, in deren Folge die Dispersion tropfenförmig aus der Kapillarspitze austritt. Eine sehr schnelle Abfolge von Tropfen kann durch entsprechend hochfrequente Ansteuerung des Aktuators generiert werden, so dass, obwohl das Volumen einzelner Tropfen typischerweise nicht groß ist, durchaus auch größere Mengen Dispersion ausgetragen werden können.

Es ist möglich, dass der Elektroden-Separator-Verbund ausschließlich aus zweidimensionalen Schichten aufgebaut wird, die jeweils nur aus einer der Dispersionen gedruckt sind. Diese Variante des Verfahrens findet z.B. dann Anwendung, wenn es um den Aufbau einfacher, klassischer Strukturen geht, bei denen eine flache Separatorschicht zwischen zwei flachen Elektrodenschichten angeordnet ist.

Komplexere Strukturen lassen sich erzeugen, wenn der Verbund zumindest teilweise auch aus zweidimensionalen Schichten aufgebaut wird, die unter Verwendung mehrerer der Dispersionen gedruckt wurden. So ist es beispielsweise denkbar, einen Elektroden-Separator-Verbund schichtweise aufzubauen, indem aus einer Separatordispersion mehrere Schichten mit identischer Grundfläche übereinander gedruckt werden, die jeweils an den gleichen vordefinierten Positionen Aussparungen aufweisen, die teilweise mit der ersten und teilweise mit der zweiten Elektrodendispersion ausgefüllt werden. Durch Überlagerung von Aussparungen, die mit der gleichen Elektrodendispersion befüllt wurden, lassen sich Strukturen erhalten, bei denen Elektroden oder Teile von Elektroden sich über mehrere Schichten senkrecht zu den Schichtebenen erstrecken. Dieses Vorgehen wird anhand der Zeichnungen noch näher erläutert.

Wichtige Parameter beim erfindungsgemäßen Verfahren sind die Natur und die Beschaffenheit der verwendeten Dispersionen.

Die erste Elektrodendispersion umfasst ein Dispersionsmittel und ein darin dispergiertes erstes elektrochemisches Aktivmaterial. In bevorzugten Ausführungsformen können ein Leitmittel und ein erster Elektrodenbinder in der Dispersion enthalten sein, entweder allein oder in Kombination. Der Elektrodenbinder kann in dem Dispergiermittel gelöst sein, in diesem Fall sollte man korrekter von einem Dispergier- und/oder Lösungsmittel sprechen. Bevorzugt ist das erste elektrochemische Aktivmaterial in der Elektrodendispersion in einem Anteil zwischen 1 Gew.-% und 75 Gew.-% enthalten, bevorzugt < 20 Gew.-%.

Die zweite Elektrodendispersion umfasst ein Dispersionsmittel und ein darin dispergiertes zweites elektrochemisches Aktivmaterial. In bevorzugten Ausführungsformen können ein Leitmittel und ein zweiter Elektrodenbinder in der Dispersion enthalten sein, entweder allein oder in Kombination. Der Elektrodenbinder kann auch hier in dem Dispergiermittel gelöst sein, in diesem Fall sollte man auch hier korrekter von einem Dispergier- und/oder Lösungsmittel sprechen. Bevorzugt ist das zweite elektrochemische Aktivmaterial in der Elektrodendispersion in einem Anteil zwischen 1 Gew.-% und 75 Gew.-% enthalten, bevorzugt < 20 Gew.-%.

Die Separatordispersion umfasst ein Dispersionsmittel und darin dispergiert elektrisch nicht leitende Fasern und/oder Partikel. Bevorzugt sind die elektrisch nicht leitenden Fasern und/oder Partikel in der Separatordispersion in einem Anteil zwischen 1 Gew.-% und 75 Gew.-% enthalten, bevorzugt kleiner 20 Gew.-%. In bevorzugten Ausführungsformen kann ein Separatorbinder enthalten sein.

Die Ableiterdispersion umfasst ein Dispersionsmittel und darin dispergierte elektrisch leitende Fasern und/oder Partikel. Bevorzugt sind die elektrisch leitenden Fasern und/oder Partikel in der Ableiterdispersion in einem Anteil zwischen 1 Gew.-% und 75 Gew.-% enthalten, bevorzugt < 20 Gew.-%. In bevorzugten Ausführungsformen kann ein Ableiterbinder enthalten sein. Auch dieser kann gegebenenfalls in dem Dispersionsmittel gelöst sein.

Welches Dispersionsmittel für die einzelnen Dispersionen gewählt wird, hängt ganz wesentlich von deren sonstigen Komponenten ab, insbesondere vom in den Dispersionen enthaltenen Binder sowie im Fall der Elektrodendispersionen insbesondere davon, welche elektrochemischen Aktivmaterialien enthalten sind. Grundsätzlich kommen als Dispersionsmittel sowohl Wasser als auch organische Lösungsmittel wie N-Methylpyrrolidon (NMP), Dimethylsulfoxid, Dimethylformamid, Dimethylacetamid, Aceton oder N-Ethylpyrrolidon (NEP) in Frage. Welche elektrochemischen Aktivmaterialien für die Elektrodendispersionen gewählt werden, hängt wiederum davon ab, welche Zellchemie die herzustellende Batterie haben soll.

Soll es sich beispielsweise bei der herzustellenden Batterie um eine Lithium-Ionen-Zelle handeln, so kommen als erstes elektrochemisches Aktivmaterial sämtliche Materialien in Frage, die in aus dem Stand der Technik bekannten positiven Elektroden für Lithium-Ionen-Batterien zum Einsatz kommen, insbesondere Lithiumkobaltoxid (LiCoO₂), Lithiummanganoxid (LiMnO₂) LiMn₂O₄-Spinell (LiMn₂O₄), Lithiumeisenphosphat (LiFePO₄ sowie Derivate wie beispielsweise LiNi_{1/3}Mn_{1/3}Co_{1/3}O₂ oder LiMnPO₄. Als dazu korrespondierendes zweites elektrochemisches Aktivmaterial kommen grundsätzlich sämtliche Materialien in Frage, die Lithiumionen aufnehmen und wieder abgeben können wie beispielsweise Partikel auf Kohlenstoffbasis (graphitischer Kohlenstoff) oder zur Interkalation von Lithium befähigte nicht-graphitische Kohlenstoffmaterialien wie Lithiumtitanatoxid (Li₄Ti₅O₁₂) und Titandioxid (TiO₂). Alternativ oder zusätzlich können auch metallische und halbmetallische Materialien zum Einsatz kommen, die mit Lithium legierbar sind, so z.B. die Elemente Zinn, Antimon und Silizium.

Handelt es sich bei der herzustellenden Batterie um eine Metall-Luft-Zelle, so kommen als erstes elektrochemisches Aktivmaterial insbesondere Katalysatormaterialien wie Palladium, Platin, Silber oder Gold und/ oder ein Manganoxid, wie es beispielsweise in der DE 37 22 091 A1 beschrieben ist, in Frage. Als dazu korrespondierendes zweites elektrochemisches Aktivmaterial umfasst eine geeignete zweite Elektrodendispersion dann beispielsweise metallische Partikel wie Zinkpartikel.

Handelt es sich bei der herzustellenden Batterie um eine alkalische Zelle, so kommen als erstes elektrochemisches Aktivmaterial insbesondere Zink oder Zink-Oxid (ZnO) in Betracht, als dazu korrespondierendes zweites elektrochemisches Aktivmaterial beispielsweise Nickel oder Nickelhydroxid (NiOH).

Als Leitmittel können sowohl für die erste Elektrodendispersion als auch für die zweite Elektrodendispersion im Grunde sämtliche leitfähigkeitsverbessernde Additive eingesetzt werden, die aus dem Stand der Technik für Batterieelektroden bekannt sind. Beispiele hierfür sind Ruß oder Nickelpulver.

Der Elektrodenbinder für die erste und/oder die zweite Elektrodendispersion wird üblicherweise in Abhängigkeit vom elektrochemischen Aktivmaterial gewählt. So eignen sich als Binder für die Elektroden von Lithium-Ionen-Zellen beispielsweise Fluorpolymere wie Polyvinylidenfluorid oder Polyvinylidendifluorid. Diese Polymere können beispielsweise in N-Methylpyrrolidon prozessiert werden. Als wässrig prozessierbare Binder für Lithium-Ionen-Batterien kommen beispielsweise SBR-Binder (Styrene-Butadiene Rubber) und Natrium-Carboxymethylzellulose (CMC) in Frage. Letztere eignet sich hervorragend auch als Elektrodenbinder für die Metallanoden von Metall-Luft-Batterien während Polymere wie die genannten Fluorpolymere wiederum als Elektrodenbinder für die positive Elektrode (Luftkathode) von solchen Zellen in Frage kommen. Pasten zur Herstellung von Luftkathoden von Metall-Luft-Zellen sind in der deutschen Patentanmeldung mit dem Aktenzeichen DE 10 2011 007 297 A1 beschrieben. Diese Pasten lassen sich zumindest in verdünnter Form grundsätzlich auch als Elektrodendispersion in einem erfindungsgemäßen Verfahren einsetzen. Sie umfassen in der Regel ein polares Lösungs- bzw. Dispersionsmittel wie Wasser, die oben genannten Edelmetalle oder Manganoxide, einen hydrophoben Kunststoff, insbesondere Fluorpolymerpartikel, als Binder, sowie als Leitmittel ein partikelförmiges leitfähigkeitsverbesserndes Additiv aus der Gruppe mit Kohlenstoff-Nanotubes, Ruß und Metallpartikeln (Nickel). Das Fluorpolymer ist bevorzugt in Form von PTFE-Partikeln (Partikel aus Polytetrafluorethylen) enthalten, die aufgrund ihrer chemischen Beständigkeit und ihres hydrophoben Charakters besonders gut geeignet sind.

Dass sich auch Separatoren durch Druck herstellen lassen, ist in der Patentanmeldung mit dem Aktenzeichen DE 10 2010 018 071 A1 beschrieben. Diese schlägt zum Drucken von Separatoren eine Paste vor, die ein Lösungs- bzw. Dispersionsmittel sowie Partikel und/oder Fasern, die in dem Lösungs- bzw. Dispersionsmittel bei Raumtemperatur zumindest nahezu, vorzugsweise vollständig, unlöslich und dabei elektrisch nicht leitend sind, umfasst. Diese Paste lässt sich zumindest in verdünnter Form grundsätzlich auch als Separatordispersion in einem erfindungsgemäßen Verfahren einsetzen.

Die in einer entsprechenden Separatordispersion enthaltenen Partikel und/oder Fasern können beim Druckprozess eine dreidimensionale Matrix ausbilden, die dem entstehenden Separator eine feste Struktur und eine ausreichend hohe mechanische Festigkeit verleiht, um Kontakte zwischen entgegengesetzt gepolten Elektroden zu unterbinden.

Die in einer entsprechenden Separatordispersion enthaltenen Partikel und/oder Fasern können grundsätzlich sowohl aus einem organischen als auch aus einem anorganischen Feststoff bestehen. Es ist beispielsweise auch möglich, Fasern aus organischen Materialien mit anorganischen Partikeln zu mischen oder umgekehrt. Der anorganische Feststoff umfasst bevorzugt mindestens eine Komponente aus der Gruppe mit keramischen Feststoffen, in Wasser nahezu oder vollständig unlöslichen Salzen, Glas, Basalt oder Kohlenstoff. Der Begriff "keramische Feststoffe" soll dabei sämtliche Feststoffe umfassen, die zur Herstellung keramischer Produkte dienen können, darunter silikatische Materialien wie Aluminiumsilikate, Gläser und Tonmineralien, oxidische Rohstoffe wie Titandioxid, Siliziumdioxid und Aluminiumoxid sowie nicht-oxidische Materialien wie Siliziumkarbid oder Siliziumnitrid. Unter dem Begriff "Faser" sollen längliche Gebilde verstanden werden, die im Verhältnis zu ihrer Länge sehr dünn sind.Besonders gut einsetzbar sind Fasern aus synthetischen Polymeren wie z.B. Polyamidfasern oder Polypropylenfasern. Alternativ können auch Fasern anorganischen oder organischen Ursprungs wie beispielsweise Glasfasern, Keramikfasern, Fasern aus Kohlenstoff oder Zellulosefasern zum Einsatz kommen.

Die Löslichkeit der einsetzbaren Partikel und/oder Fasern, insbesondere der erwähnten in Wasser nahezu oder vollständig unlöslichen Salze, sollte idealerweise die Löslichkeit von Calciumcarbonat in Wasser bei Raumtemperatur (25 °C) nicht übersteigen. Bei Calciumcarbonat handelt es sich im Übrigen um ein besonders bevorzugtes Beispiel für einen anorganischen Feststoff, der als Komponente mit Abstandshalterfunktion insbesondere in Partikelform in einer Separatordispersion enthalten sein kann.

Bei dem in einer entsprechenden Separatordispersion enthaltenen Lösungs- bzw. Dispersionsmittel handelt es sich bevorzugt um ein polares Lösungsmittel, beispielsweise um Wasser. Grundsätzlich können jedoch auch nicht wässrige aprotische Lösungsmittel verwendet werden, wie sie aus dem Bereich der Produktion von Lithium-Ionen-Batterien bekannt sind (s. z.B. die oben erwähnten Lösungsmittel).

Das in der DE 10 2010 018 071 A1 beschriebene Leitsalz muss in einer für das erfindungsgemäße Verfahren geeigneten Separatordispersion nicht zwingend enthalten sein. Wenn es enthalten ist, handelt es sich dabei bevorzugt um mindestens eine Verbindung, die bei Raumtemperatur in dem Dispersions- bzw. Lösungsmittel löslich ist bzw. die in diesem in Form von solvatisierten Ionen vorliegt. Es umfasst beispielsweise mindestens eine Komponente aus der Gruppe mit Zinkchlorid, Kaliumhydroxid und Natriumhydroxid. Darüber hinaus sind gegebenenfalls auch noch Leitsalze wie Lithiumhexafluorophosphat oder Lithiumtetrafluoroborat, die ebenfalls insbesondere aus dem Bereich der LithiumIonen-Batterien bekannt sind, als Leitsalz einsetzbar.

Der Separatorbinder dient dazu, dem aus der Separatordispersion herstellbaren Separator eine bessere mechanische Stabilität, insbesondere eine bessere mechanische Belastbarkeit und Flexibilität zu verleihen. Als Separatorbinder eignen sich beispielsweise Carboxymethylzellulose, SBR-Binder, PVDF-basierte Binder oder anorganische Komponenten mit bindenden Eigenschaften wie Siliziumdioxid.

Als Ableiterdispersionen brauchbare Dispersionen sind bereits seit längerem bekannt. Hierbei handelt es sich üblicherweise um Dispersionen enthaltend als elektrisch leitende Fasern und/oder Partikel z.B. metallische Partikel wie Silber-, Gold-, Kupfer-, Aluminium- oder Nickelpartikel. Als Ableiterbinder eignen sich beispielsweise ein PVDF-basierter Binder oder CMC und SBR. Als Dispersionsmittel sind insbesondere NMP oder NEP, Aceton oder Wasser gebräuchlich.

Alle im Rahmen eines erfindungsgemäßen Verfahrens einsetzbaren Dispersionen können neben den genannten Komponenten ein oder mehrere Additive umfassen. Diese diene insbesondere dazu, die Verarbeitungseigenschaften der Dispersionen zu variieren. Beispielsweise können als Additive sämtliche im Bereich der InkJet-Tinten gebräuchlichen Additive zum Einsatz kommen, beispielsweise Rheologiehilfsmittel, mit denen die Viskosität der Dispersionen angepasst werden kann.

Sämtliche Partikel und/oder Fasern in den Dispersionen sollten idealerweise einen mittleren Durchmesser bzw. im Falle von Fasern eine mittlere Länge im Bereich zwischen 0,1 µm und 50 µm aufweisen. Besonders bevorzugt sind die Dispersionen dabei frei von Partikeln und/oder Fasern, die einen Durchmesser und/oder eine Länge von mehr als 100 µm aufweisen. Diese Werte liegen darin begründet, dass zu große Partikel und/oder Fasern die beim InkJet-Printing üblicherweise zum Einsatz kommenden Düsen verstopfen könnten.

In bevorzugten Ausführungsformen können die Dispersionen als Binder ein vernetzbares Polymer oder einen polymerisierbaren Polymervorläufer enthalten, das bzw. der durch Wärme und/oder durch Strahlung vernetzen oder polymerisieren kann. Es ist bevorzugt, dass zweidimensionale Schichten, die aus einer solchen Dispersion gedruckt wurden, erwärmt und/oder bestrahlt werden, bevor sie überdruckt werden.

Das Überdrucken einer Schicht ist grundsätzlich problematisch, wenn diese nicht eine gewisse mechanische Grundfestigkeit aufweist. Eine solche mechanische Grundfestigkeit lässt sich durch Härtung oder Polymerisation des Polymers oder des Polymervorläufers erhalten. Geeignet als vernetzbare Binder sind beispielsweise Polyimid-Harze, wie sie in der US 2011/0111292 A1 beschrieben sind, insbesondere die darin beschriebenen Polyamidimide, Polyetheramidimide, Polyetherimide, Polyetherimidester oder Mischungen dieser Verbindungen.

Ein solcher polymerisierbarer bzw. vernetzbarer Binder kann der einzige Binder in einer der Dispersionen sein, er kann aber auch in Kombination mit anderen Bindern, beispielsweise den erwähnten Fluorpolymeren, verwendet werden.

Natürlich ist es auch möglich, Schichten zu überdrucken, die kein vernetzbares Polymer und keinen polymerisierbaren Polymervorläufer enthalten. Allerdings sollte in solchen Fällen in der zu überdruckenden zweidimensionalen Schicht enthaltenes Dispersionsmittel vor dem Überdrucken mindestens teilweise, vorzugsweise vollständig, entfernt werden.

Der Anteil an Binder in den Dispersionen liegt in bevorzugten Ausführungsformen zwischen 5 Gew.-% und 60 Gew.-%. In diesem Fall sind Trocknungsschritte nahezu unumgänglich. Erhöht man jedoch den Binderanteil in den Dispersionen, insbesondere auf Werte > 60 Gew.-%, so können gegebenenfalls auch feuchte Schichten überdruckt werden.In besonders bevorzugten Ausführungsformen werden die gedruckten Schichten kompaktiert, also einem Druck ausgesetzt, insbesondere um zu vermeiden, dass die entstehenden Schichten eine zu hohe Porosität aufweisen. Die Kompaktierung einzelner Schichten kann jeweils erfolgen, bevor sie mit einer weiteren Schicht überdruckt werden. Es ist aber durchaus auch denkbar, mehrere Schichten in einem Schritt zu kompaktieren oder zuerst den Elektroden-Separator-Verbund komplett aus einzelnen Schichten aufzubauen und dann den gesamten Verbund in einem Schritt zu kompaktieren.

Es ist weiterhin bevorzugt, dass der Verbund einer Wärmebehandlung unterworfen wird, insbesondere nach seiner Fertigstellung. Eine derartige Wärmebehandlung hat den Zweck, gegebenenfalls enthaltenes Restdispersionsmittel aus dem Verbund zu entfernen.

In besonders bevorzugten Ausführungsformen kann es aber auch bevorzugt sein, die Wärmebehandlung bei einer Temperatur durchzuführen, bei der der Verbund und damit die einzelnen zweidimensionalen Schichten, aus denen er sich zusammensetzt, gesintert werden. Bei einem solchem Sintervorgang kann die Porosität des entstehenden Verbundes feinjustiert werden. Darüber hinaus ist es möglich, für die Prozessierung der Dispersionen erforderliche organische Additive sowie weitere unerwünschte organische Rückstände auszubrennen.

Der Verbund kann anschließend mit einem Elektrolyten getränkt werden. Elektrolyten für die unterschiedlichen elektrochemischen Systeme in Batterien sind hinlänglich bekannt und müssen im Rahmen der vorliegenden Anmeldung nicht ausführlich erläutert werden.

Erfindungsgemäß werden die zweidimensionalen Schichten unmittelbar in das Gehäuse oder in ein Teil des Gehäuses der herzustellenden Knopfzelle gedruckt.

Nach dem erfindungsgemäßen Verfahren hergestellte Knopfzellen weisen ein Gehäuse auf, in dem der durch Druck gebildete dreidimensionale Elektroden-Separator-Verbund angeordnet ist. In der einfachsten Ausführungsformen umfasst dieser nur zwei Elektroden und einen Separator, insbesondere in einer gestapelten Abfolge, in weiteren Ausführungsformen auch einen oder mehrere Ableiter.

Weitere Merkmale und Vorteile der beschriebenen Erfindung ergeben sich aus den Zeichnungen sowie aus der nachfolgenden Beschreibung einiger bevorzugter Ausführungsformen in Verbindung mit den Unteransprüchen. Hierbei können Merkmale der Erfindung jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

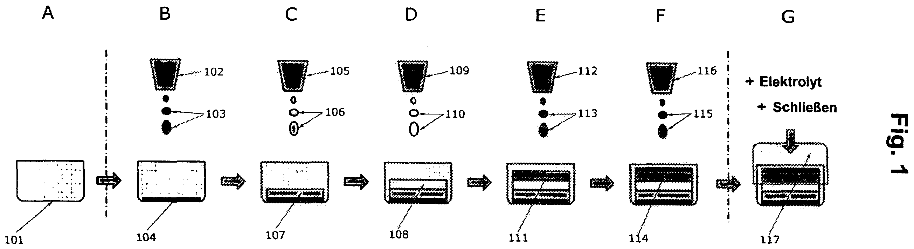

**Fig. 1** illustriert schematisch den Ablauf einer bevorzugten Ausführungsform eines erfindungsgemäßen Verfahrens, das der Herstellung einer Knopfzelle dient.
- In Schritt **A** wird ein Gehäusedeckel **101** bereitgestellt.
- In Schritt **B** wird mittels des Druckkopfes **102** eine Ableiterdispersion **103** in den Gehäusebecher **101** eingebracht. Es bildet sich der Ableiter **104** auf dem Boden des Gehäusebechers **101.**
- In Schritt **C** wird aus dem Druckkopf **105** eine erste Elektrodendispersion **106** in den Gehäusebecher **101** eingebracht. Die Ableiterschicht **104** wird mit dieser Dispersion überdruckt. Auf der Ableiterschicht **104** wird die erste Elektrode **107** gebildet.
- Diese wird anschließend in Schritt **D** mit der Separatorschicht **108** bedeckt, die mittels des Druckkopfes **109,** aus dem die Separatordispersion **110** ausgestoßen wird, gebildet wird.
- In Schritt **E** wird auf die Separatorschicht **108** die zweite Elektrode **111** mittels des Druckkopfes **112** aus der zweiten Elektrodendispersion **113** gebildet.
- Diese wird in Schritt **F** abschließend mit der Stromkollektorschicht **114** überdruckt. Diese wird aus der Ableiterdispersion **115** mittels des Druckkopfes **116** gebildet.
- In Schritt **G** wird der mit dem Elektroden-Separator-Verbund aus den Schichten **104, 107, 108, 111** und **114** befüllte Gehäusedeckel **101** in den Gehäusebecher **117** eingeschoben.

Vor dem Schließen des Gehäuses wird der Verbund in der Regel getrocknet und mit einem geeigneten Elektrolyten getränkt.

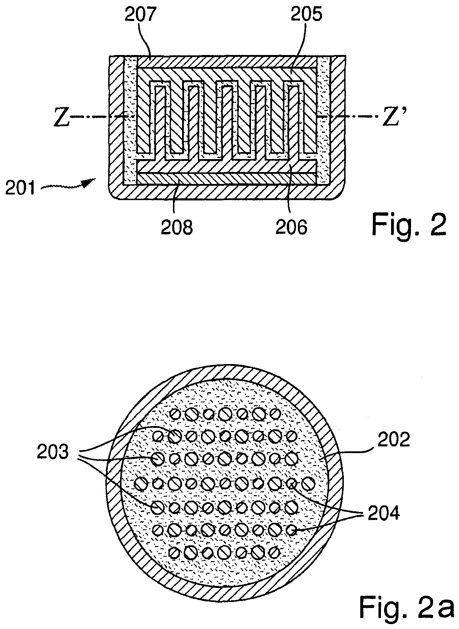

**Fig. 2** illustriert eine Variante des erfindungsgemäßen Verfahrens, bei der ein Elektroden-Separator-Verbund **201** nicht nur ausschließlich aus zweidimensionalen Schichten aufgebaut wird, die jeweils nur aus einer der Dispersionen gedruckt sind. Vielmehr wird zumindest der Mittelteil des dargestellten Verbundes **201** gebildet, indem aus einer Separatordispersion mehrere Schichten mit identischer Grundfläche übereinandergedruckt werden, die jeweils an den gleichen vordefinierten Positionen Aussparungen aufweisen, die teilweise mit der ersten und teilweise mit der zweiten Elektrodendispersion ausgefüllt werden. In der Querschnittsdarstellung (Schnitt entlang der Linie Z - Z') in **Fig. 2a** ist eine solche aus einer Separatordispersion gedruckte Schicht **202** dargestellt. Die Aussparungen **203** sind mit der ersten Elektrodendispersion ausgefüllt, die Aussparungen **204** mit der zweiten. Durch Überlagerung von Aussparungen, die mit der gleichen Elektrodendispersion befüllt wurden, lassen sich Strukturen wie die dargestellte erhalten, bei denen die Elektroden bzw. Teile von Elektroden sich über mehrere Schichten senkrecht zu den Schichtebenen erstrecken. Die erste Elektrode ist mit dem Bezugszeichen **205** gekennzeichnet, die zweite mit dem Bezugszeichen **206.** Stirnseitig weist der Verbund die Ableiter **207** und **208** auf. dergedruckt werden, die jeweils an den gleichen vordefinierten Positionen Aussparungen aufweisen, die teilweise mit der ersten und teilweise mit der zweiten Elektrodendispersion ausgefüllt werden. In der Querschnittsdarstellung (Schnitt entlang der Linie Z - Z') in **Fig. 2a** ist eine solche aus einer Separatordispersion gedruckte Schicht **202** dargestellt. Die Aussparungen **203** sind mit der ersten Elektrodendispersion ausgefüllt, die Aussparungen **204** mit der zweiten. Durch Überlagerung von Aussparungen, die mit der gleichen Elektrodendispersion befüllt wurden, lassen sich Strukturen wie die dargestellte erhalten, bei denen die Elektroden bzw. Teile von Elektroden sich über mehrere Schichten senkrecht zu den Schichtebenen erstrecken. Die erste Elektrode ist mit dem Bezugszeichen **205** gekennzeichnet, die zweite mit dem Bezugszeichen **206.** Stirnseitig weist der Verbund die Ableiter **207** und **208** auf.

## Patentansprüche

1. Verfahren zur Herstellung einer Knopfzelle, die ein Gehäuse und einen darin angeordneten dreidimensionalen Elektroden-Separator-Verbund aufweist, wobei der Elektroden-Separator-Verbund
- mindestens eine erste Elektrode,
- mindestens eine zweite, zur ersten entgegengesetzt gepolte Elektrode,
- mindestens einen die erste und die zweite Elektrode räumlich trennenden Separator sowie
- gegebenenfalls mindestens einen Ableiter umfasst,
**dadurch gekennzeichnet, dass**
der Verbund schichtweise aufgebaut wird, indem zweidimensionale Schichten aus
- einer erste Elektrodendispersion zur Herstellung der mindestens einen ersten Elektrode und/oder
- einer zweiten Elektrodendispersion zur Herstellung der mindestens einen zweiten Elektrode und/oder
- einer Separatordispersion zur Herstellung des mindestens einen Separators und/oder
- mindestens einer Ableiterdispersion zur Herstellung des mindestens einen Ableiters
sequentiell übereinander und unmittelbar in das Gehäuse oder in einen Teil des Gehäuses der herzustellenden Knopfzelle gedruckt werden.

2. Verfahren nach Anspruch 1, **dadurch gekennzeichnet, dass** der Verbund aus zweidimensionalen Schichten aufgebaut wird, die aus nur einer der Dispersionen gedruckt sind und/oder mehrere der Dispersionen umfassen.

3. Verfahren nach Anspruch 1 oder Anspruch 2, **dadurch gekennzeichnet, dass** die verwendeten Dispersionen die folgende Zusammensetzung aufweisen:
- Die erste Elektrodendispersion umfasst ein Dispersionsmittel, ein darin dispergiertes erstes elektrochemisches Aktivmaterial sowie bevorzugt ein Leitmittel und/oder ein erster Elektrodenbinder.
- Die zweite Elektrodendispersion umfasst ein Dispersionsmittel, ein darin dispergiertes zweites elektrochemisches Aktivmaterial sowie bevorzugt ein Leitmittel und/oder ein zweiter Elektrodenbinder.
- Die Separatordispersion umfasst ein Dispersionsmittel, darin dispergierte, elektrisch nicht leitende Fasern und/oder Partikel sowie in bevorzugten Ausführungsformen einen Binder.
- Die Ableiterdispersion umfasst ein Dispersionsmittel, darin dispergierte elektrisch leitende Fasern und/oder Partikel sowie in bevorzugten Ausführungsformen einen Binder.

4. Verfahren nach einem der Ansprüche 1 bis 3, **dadurch gekennzeichnet, dass** mindestens eine der Dispersionen als Binder ein vernetzbares Polymer oder einen Polymervorläufer enthält, welches / welcher durch Wärme und/oder Strahlung vernetzen / polymerisieren kann.

5. Verfahren nach Anspruch 4, **dadurch gekennzeichnet, dass** zweidimensionale Schichten, die aus einer Dispersion mit einem vernetzbaren Polymer oder einem Polymervorläufer gedruckt wurden, erwärmt und/oder bestrahlt werden, bevor sie überdruckt werden.

6. Verfahren nach einem der vorhergehenden Ansprüche, **dadurch gekennzeichnet, dass** in einer zweidimensionalen Schicht enthaltenes Dispersionsmittel mindestens teilweise entfernt wird, bevor die Schicht überdruckt wird.

7. Verfahren nach einem der vorhergehenden Ansprüche, **dadurch gekennzeichnet, dass** die Schichten kompaktiert werden, insbesondere bevor sie überdruckt werden.

8. Verfahren nach einem der vorhergehenden Ansprüche, **dadurch gekennzeichnet, dass** der Verbund einer Wärmebehandlung unterworfen, insbesondere gesintert, wird.

9. Verfahren nach einem der vorhergehenden Ansprüche, **dadurch gekennzeichnet, dass** die zweidimensionalen Schichten unmittelbar in das Gehäuse oder in ein Teil des Gehäuses gedruckt werden oder dass der Verbund nach seinem Aufbau, insbesondere nach der Kompaktierung der Schichten und/oder der Wärmebehandlung, in das Gehäuse überführt wird.

## Claims

1. Process for producing a button cell having a housing and a three-dimensional electrode-separator assembly arranged therein, where the electrode-separator assembly comprises
- at least one first electrode,
- at least one second electrode having the opposite polarity to the first,
- at least one separator physically separating the first electrode and the second electrode and
- optionally at least one power outlet lead,
**characterized in that**
the assembly is built up in layers by sequentially printing two-dimensional layers of
- a first electrode dispersion to produce the at least one first electrode and/or
- a second electrode dispersion to produce the at least one second electrode and/or
- a separator dispersion to produce the at least one separator and/or
- at least one power outlet lead dispersion to produce the at least one power outlet lead
on top of one another and directly into the housing or into a part of the housing of the button cell to be produced.

2. Process according to Claim 1, **characterized in that** the assembly is built up of two-dimensional layers which have been printed from only one of the dispersions and/or comprise a plurality of the dispersions.

3. Process according to Claim 1 or Claim 2, **characterized in that** the dispersions used have the following compositions:
- The first electrode dispersion comprises a dispersion medium, a first electrochemical active material dispersed therein and preferably a conductivity improver and/or a first electrode binder.
- The second electrode dispersion comprises a dispersion medium, a second electrochemical active material dispersed therein and preferably a conductivity improver and/or a second electrode binder.
- The separator dispersion comprises a dispersion medium, electrically nonconductive fibers and/or particles dispersed therein and, in preferred embodiments, a binder.
- The power outlet lead dispersion comprises a dispersion medium, electrically conductive fibers and/or particles dispersed therein and, in preferred embodiments, a binder.

4. Process according to any of Claims 1 to 3, **characterized in that** at least one of the dispersions contains a crosslinkable polymer or a polymer precursor which can crosslink/polymerize under the action of heat and/or radiation as binder.

5. Process according to Claim 4, **characterized in that** two-dimensional layers which have been printed using a dispersion comprising a crosslinkable polymer or a polymer precursor are heated and/or irradiated before they are overprinted.

6. Process according to any of the preceding claims, **characterized in that** dispersion medium present in a two-dimensional layer is at least partly removed before the layer is overprinted.

7. Process according to any of the preceding claims, **characterized in that** the layers are compacted, in particular before they are overprinted.

8. Process according to any of the preceding claims, **characterized in that** the assembly is subjected to a heat treatment, in particular is sintered.

9. Process according to any of the preceding claims, **characterized in that** the two-dimensional layers are printed directly into the housing or into a part of the housing or **in that** the assembly is, after it has been built up, in particular after compaction of the layers and/or the heat treatment, transferred into the housing.

## Revendications

1. Procédé de fabrication d'une pile bouton, qui présente un boîtier et un composite électrodes-séparateur tridimensionnel disposé dans celui-ci, dans lequel le composite électrodes-séparateur comprend
- au moins une première électrode,
- au moins une deuxième électrode, de polarité inverse de la première,
- au moins un séparateur séparant spatialement la première et la deuxième électrodes, ainsi que
- éventuellement au moins un élément d'évacuation, **caractérisé en ce que**
le composite est construit en couches, par le fait que des couches bidimensionnelles en
- une première dispersion d'électrode pour la production de ladite au moins une première électrode et/ou
- une deuxième dispersion d'électrode pour la production de ladite au moins une deuxième électrode et/ou
- une dispersion de séparateur pour la production dudit au moins un séparateur et/ou
- au moins une dispersion de collecteur de courant pour la production dudit au moins un élément d'un collecteur de courant
sont pressées séquentiellement l'une au-dessus de l'autre et directement dans le boîtier ou dans une partie du boîtier de la pile bouton à fabriquer.

2. Procédé selon la revendication 1, **caractérisé en ce que** le composite est construit en couches bidimensionnelles, qui sont pressées à partir de seulement une des dispersions et/ou qui comprennent plusieurs des dispersions.

3. Procédé selon la revendication 1 ou la revendication 2, **caractérisé en ce que** les dispersions utilisées présentent la composition suivante:
- la première dispersion d'électrode comprend un agent de dispersion, un premier matériau actif électrochimique dispersé dans celui-ci ainsi que de préférence un agent conducteur et/ou un premier liant d'électrode ;
- la deuxième dispersion d'électrode comprend un agent de dispersion, un deuxième matériau actif électrochimique dispersé dans celui-ci ainsi que de préférence un agent conducteur et/ou un deuxième liant d'électrode ;
- la dispersion de séparateur comprend un agent de dispersion, des fibres et/ou des particules électriquement non conductrices dispersées dans celui-ci ainsi que, dans des formes de réalisation préférées, un liant ;
- la dispersion de collecteur de courant comprend un agent de dispersion, des fibres et/ou des particules électriquement conductrices dispersées dans celui-ci ainsi que, dans des formes de réalisation préférées, un liant.

4. Procédé selon l'une quelconque des revendications 1 à 3, **caractérisé en ce qu'**au moins une des dispersions contient comme liant un polymère réticulable ou un précurseur de polymère, qui peut être réticulé/polymérisé par la chaleur et/ou par un rayonnement.

5. Procédé selon la revendication 4, **caractérisé en ce que** des couches bidimensionnelles, qui ont été pressées à partir d'une dispersion avec un polymère réticulable ou un précurseur de polymère, sont chauffées et/ou irradiées avant d'être pressées par surpression.

6. Procédé selon l'une quelconque des revendications précédentes, **caractérisé en ce qu'**un agent de dispersion contenu dans une couche bidimensionnelle est éliminé au moins en partie, avant que la couche soit pressée par surpression.

7. Procédé selon l'une quelconque des revendications précédentes, **caractérisé en ce que** les couches sont compactées, en particulier avant d'être pressées par surpression.

8. Procédé selon l'une quelconque des revendications précédentes, **caractérisé en ce que** le composite est soumis à un traitement thermique, en particulier est fritté.

9. Procédé selon l'une quelconque des revendications précédentes, **caractérisé en ce que** les couches bidimensionnelles sont pressées directement dans le boîtier ou dans une partie du boîtier ou **en ce que** le composite est transféré dans le boîtier après sa construction, en particulier après le compactage des couches et/ou le traitement thermique.
